# EUROPEAN PATENT SPECIFICATION

(11) **EP 0 689 761 B1**
(45) Date of publication and mention of the grant of the patent: **25.10.2000**
(21) Application number: 95201719.2
(22) Date of filing: 23.06.1995
(51) Int. Cl.: A01K 1/12, A01J 5/017

(54) **An implement for automatically milking animals**
Gerät zum automatischen Melken von Tieren
Dispositif de traite automatique d'animaux

(30) Priority: 28.06.1994 NL 9401070
(43) Date of publication of application: 03.01.1996
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 091 892
- FR-A- 2 128 901

## Description

The present invention relates to a construction as described in the preamble of claim 1.

Such an implement is known from EP-A-0091892.

The construction of EP-A-0091892 has the disadvantage that the connection of the teat cups has to be finished before a next animal to be milked can enter the rotary platform.

The invention has for its objective to have a construction of the above-defined type in which the entering of the next animal on the platform is independently of the finishing of the connection of the teat cups.

According to the invention, this is achieved by the features as defined in the characterizing part of claim 1.

According to a further feature of the invention, the implement is arranged such that, in order to be milked, the animals to be milked can set foot on the rotary platform one after the other at intervals of about one minute. According to a feature of the invention, the implement comprises a plurality of milking parlours which are detachably interconnected such that the implement is adaptable to the size of the farm.

According to still another feature of the invention, the platform is bounded on both sides or on one side by a stationary or fixed wall. In an exemplary embodiment of the invention, the walls are designed as a fencing. According to a feature of the invention, a milking parlour is on the front side and on the rear side bounded by a wall which is moved along with the platform. According to the invention, the wall at the front side of the milking parlour comprises a feed trough.

The distance over which the milking robot is movable amounts to approximately the length of two milking parlours.

In a further exemplary embodiment of the invention, the implement comprises the same number of cleaning boxes for cleaning the animal or at least the teats as that of milking parlours. According to a further feature of the invention, the cleaning boxes are disposed side by side.

According to a further aspect of the invention, the entrance to the movable floor is provided with a computer-controlled entrance door. To determine which animal is to be admitted to the cleaning box and/or the milking parlour, and/or to determine which amount of feeds is to be supplied to an animal into the feed trough, according to the invention, the construction is also provided with an animal identification system comprising transponders disposed on the animals.

According to a feature of the invention, the construction comprises a shed in which the implement for milking animals is installed, with this shed being designed as a loose house.

According to a further feature of the invention, the implement comprises a computer-controlled concentrates-proportioning system suitable for individually dispensing a defined amount of feeds to each animal.

The invention will now be further explained with reference to the accompanying drawings, in which:
Figure 1 shows a plan view of a first exemplary embodiment of a rotary platform with a milking robot and a cleaning box;
Figure 2 shows a plan view of a second exemplary embodiment of the invention comprising a rotary platform, a milking robot and two cleaning boxes;
Figure 3 shows a third exemplary embodiment not according to the invention, which includes a number of cleaning boxes situated side by side and connected with milking parlours equipped with a milking robot;
Figure 4 shows a fourth exemplary embodiment of the invention, which includes two moving-carpet floors disposed parallel to each other at a certain mutual distance and each provided with a milking robot and a cleaning box.

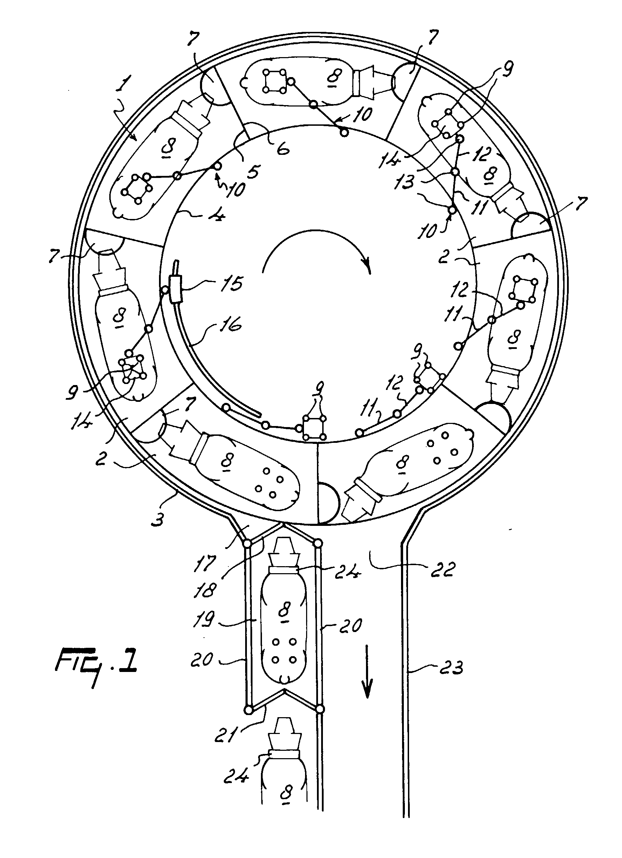

Figure 1 shows a plan view of a first exemplary embodiment of the invention, which includes a movable floor designed as a rotary platform 1 accommodating seven milking parlours 2. The rotary platform 1 comprises a fixed outer wall 3 and an inner wall 4 which moves along with the rotary platform 1. In the present embodiment of the invention, the outer wall 3 and the inner wall 4 are designed as a fencing. Each milking parlour 2 is bounded by a front wall 5 and a rear wall 6, with the front wall 5 of a milking parlour 2 being the rear wall 6 of the milking parlour 2 which lies in front. During operation, the walls 5 and 6 are moved along with the rotary platform 1. The front walls 5 are provided with a feed trough 7, in which an animal 8 receives feeds by means of a (non-shown) computer-controlled concentrates-proportioning system during the stay in a milking parlour 2. A milking parlour 2 further comprises four teat cups 9 placed on the end of a load-bearing arm 10. The load-bearing arm 10 is disposed near the inner wall 4 and it also turns along with the rotary platform 1. Each of the load-bearing arms 10 is composed of a first arm part 11 and a second arm part 12, each of which parts is provided with vertical hinge pins 13, the arrangement being such that the first arm part 11 is capable of pivoting relatively to a second arm part 12 and the load-bearing arm 10 is capable of being swung to underneath an animal 8 in a milking parlour 2. The teat cups 9 placed on a carrier 14 are also capable of pivoting on a vertical hinge pin 13 and relatively to the second arm part 12. Besides, each of the hinge pins 13 can comprise a (non-shown) stepping motor for the purpose of positioning the teat cups 9 under the animal 8 in an appropriate manner. For connection to, or disconnection from the teats, as the case may be, the teat cups 9 can be moved individually or simultaneously with respect to the carrier 14.

Furthermore, near the inner wall 4 there is placed a milking robot 15, by means of which the teat cups 9 can be automatically connected to the animals of an animal. For the purpose of finding the positions of an animal's teats, the milking robot 15 comprises a (non-shown) detector, such as a laser or ultrasound sensor. Moreover, the milking robot 15 is installed reciprocatingly on a rail track 16. The rail track 16 runs parallel to the curved inner wall 4, while its length roughly amounts to between 1.5 and 2 times the length of an inner wall of a milking parlour 2.

Near the location where the milking robot 15 is installed, there is connected to the outer wall 3 of the rotary platform 11 the entrance 17 to the milking parlours 2, which entrance is provided with a computer-controlled entrance door 18. The construction comprises, connected to the entrance door 18, a cleaning box 19 for cleaning the teats of an animal to be milked. The cleaning box 19 is bounded on both sides by a fencing 20 and comprises an entrance door 21 which is also computer-controlled. Next to the entrance door 18 to the milking parlours 2 there is an exit 22, through which the animals 8 can leave the rotary platform 1 after they have been milked. The exit 22 is also bounded by a fencing 23.

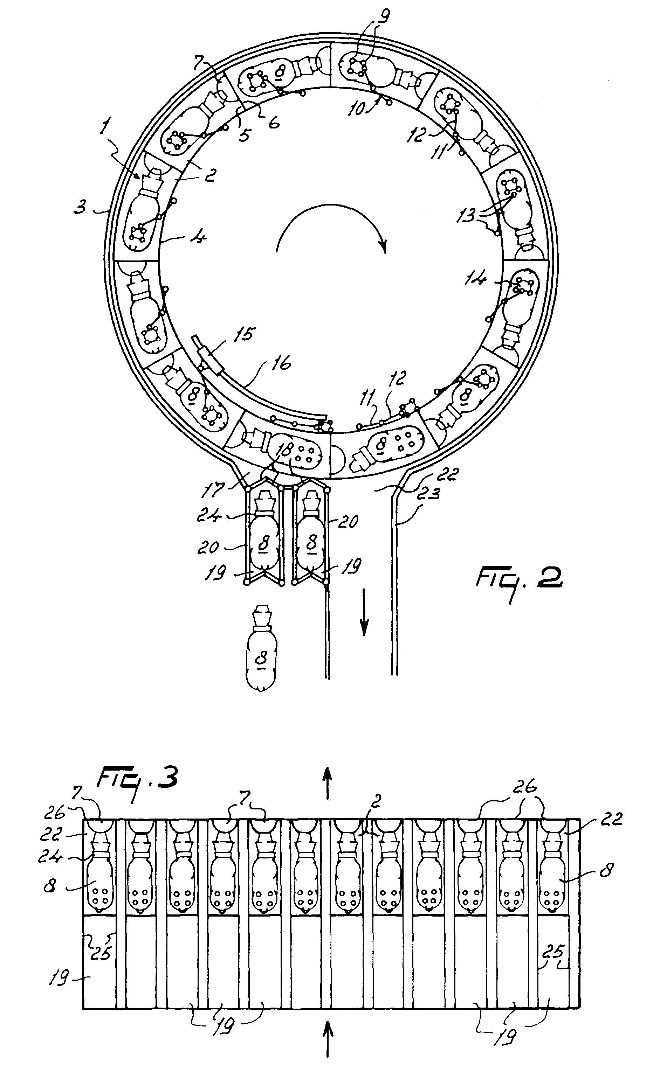

Figure 2 represents a second exemplary embodiment of the construction according to the invention which, in broad outlines, is similar to that of Figure 1, on account of which corresponding parts have been given the same reference numbers. In Figure 2, the rotary platform 1 comprises twelve milking parlours 2 and the milking robot 15 is placed on a rail track 16 of a length which is twice that of a milking parlour 2. Moreover, the construction comprises two cleaning boxes 19 situated side by side near the entrance 17 to the rotary platform 1. Each of the cleaning boxes 19 is provided with computer-controlled entrance doors 18 and 21, as already has been described for the first exemplary embodiment.

Notwithstanding the fact that it is not represented in the exemplary embodiments of Figures 1 and 2, it is also feasible to place a plurality of robots 15 along the inner wall, instead of one robot 15, and to increase the number of milking parlours 2, if necessary.

The embodiment according to Figure 1 permits a herd of about 500 cows to be milked every 24 hours, where the time taken to connect the teat cups 9 to the teats of an animal to be milked amounts to about one minute and the milking time per animal amounts to five minutes, while the turn-round time, i.e. the time in which a milking parlour 2 travels from the entrance 17 to the exit 22, amounts to about seven minutes.

The construction according to the second exemplary (Figure 2) permits a herd of about 1,000 cows to be milked every 24 hours, where the time for teat-cup connection amounts to about half a minute and the milking time of an animal amounts to about five minutes, while the turn-round time amounts to six minutes.

The operation of the above-mentioned embodiments is as follows. After an animal has reported itself at the entrance door 21 to a cleaning box 19, the identity of the animal 8 is established by means of a transponder 24 disposed on an animal 8 and a (non-shown) animal identification system, whereupon it is checked by a computer whether the animal may be milked. If the animal 8 is in need of being milked, the computer-controlled entrance doors 21 are opened and the animal can go into the cleaning box 19, where the animal's teats are then cleaned automatically. After this has been completed and then, on a rotary platform 1, in front of the entrance 17, a milking parlour 2 is free, the computer-controlled entrance door 21 is opened and the animal 8 can take its position in the respective milking parlour 2. At the time of entering the milking parlour, or after the animal has entered the milking parlour 2, the rotary platform is or will be put into operation and the milking parlour 2 is made to rotate clockwise, as viewed from above. At the same moment, the positions of the animal's teats are determined by means of the detector fitted on the milking robot 15, while, on the rail track 16, the milking robot 15 moves along with the milking parlour 2. After the animal's teat positions have been found and the milking robot 15 has been coupled to the load-bearing arm 10, the teat cups 9 are put underneath the teats and sequentially or simultaneously connected to the animal's teats. Subsequently, the milking robot 15 is uncoupled from the load-bearing arm 10 and, moving along the rail track, returned to the position of departure, whereupon a subsequent load-bearing arm 10 can be gripped for connecting other teat cups 9. During the milking of an animal, the rotary platform 1 can remain moving or be halted at times in order to make a new animal 8 take its position in a milking parlour 2 which has become free.

After it has been detected, for instance, by means of a sensor, that the udder or a quarter of the udder has been milked out, a teat cup 9 or teat cups 9 is/are automatically disconnected by means of disconnecting means and the load-bearing arm 10 including the teat cups 9 is swung out of the milking parlour 2. After this, the animal 8 can leave the rotary platform 1 when the milking parlour 2 has turned to opposition to the exit 22. Using a (non-shown) cleaning implement, the teat cups 9 can be cleaned before the milking parlour 2 is turned to opposite the entrance 17, whereafter a subsequent animal 8 can take its position in the milking parlour 2 in order to be milked.

In the exemplary embodiment of the invention according to Figure 2, milking, connecting teat cups 9 and cleaning the teats of the animal 8 proceed in the same manner as described above, though with the exception that connection can be effected in a shorter time as a result of the application of, for instance, a more quick-acting, more expensive milking robot 15.

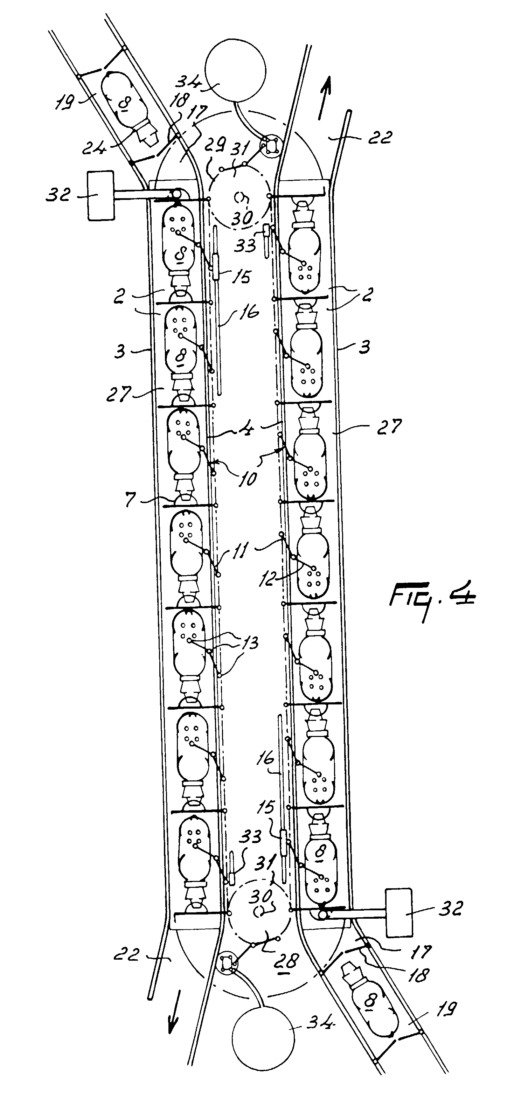

Figure 3 represents a third exemplary embodiment of a construction not according to the invention, where a number of cleaning boxes 19 each connected to a milking parlour 2 each having a (non-shown) milking robot are arranged side by side, the arrangement being such that the milking parlours 2 are detachably interconnected, so that the implement is adaptable to the size of the farm. The cleaning box 19 as well as the milking parlour 2 is bounded by walls 25 on both sides.

The operation of this implement is as follows.

After the animal identification system has found that an animal 8 may be milked, this animal 8 is admitted to the cleaning box 19 by opening the (non-shown) computer-controlled door, whereupon the teats of the animal 8 are automatically cleaned. When the corresponding milking parlour 2 is free, the animal 8 is admitted to the milking parlour 2. Subsequently, the positions of the teats are determined and the teat cups are connected to the teats by means of the milking robot-with-detector corresponding with the milking parlour 2, whereupon milking can start. After it has appeared that a relevant quarter of an udder is empty, the teat cups are disconnected individually or simultaneously, after which the animal is allowed to leave the milking parlour 2 through the exit 22 by opening of a computer-controlled exit door 26. In the exemplary embodiment of Figure 3, twelve milking parlours 2 with twelve cleaning boxes 19 are arranged side by side; this is sufficient for milking a herd of about 1,000 cows three times per 24 hours.

Figure 4 shows a plan view of a fourth exemplary embodiment of the construction according to the invention, where the movable floor is made in the form of two moving-carpet floors 27 disposed at a certain distance from each other. The moving-carpet floor 27 is bounded on its sides by a fixed outer wall and a fixed inner wall 4, each being designed as a fencing in the present exemplary embodiment. In between the inner walls 4 of the moving-carpet floors 27 there is provided a conveyor belt 28 for the teat cups 9. The conveyor 28 comprises a cable or belt 29 which is fitted round two pulleys 31 mounted on vertical shafts 30 at a certain mutual distance. The first shaft 30 is mounted near one end of a moving-carpet floor 27 and the second shaft 30 is mounted near the other end of a moving-carpet floor 27. On the cable or belt 29 there are disposed the load-bearing arms 10 for the teat cups 9 at a fixed mutual distance as well as, at equal mutual distances, front walls 5 and rear walls 6 of the milking parlours 2. Each of the front walls 5 is at the same time the rear wall of a connected milking parlour 2, and is provided with a feed trough 7, as is also the case in the foregoing exemplary embodiments. Through a concentrates-proportioning system 32 installed near the entrance 17 to the moving-carpet floor 27, an amount of foods metered for a given animal can be dispensed into each of the feed troughs 7.

Near the entrance 17, a rail track 16 is mounted parallel to the inner wall 4 of a moving-carpet floor 27, along which rail track 17 the milking robot 15 is capable of being moved forwards and backwards. The length of the rail track 16 amounts to approximately the length of two milking parlours 2. Furthermore, near the exit 22 of a moving-carpet floor 27, there is disposed a cleaning implement 34 for cleaning the teat cups 9. In addition, the construction comprises, near the entrance 17 to the moving-carpet floor 27, a cleaning box 19 for cleaning the teats of an animal 8 to be milked. As is also the case in the foregoing exemplary embodiments, the cleaning box 19 is provided with computer-controlled entrance doors 18 and 21. In the present exemplary embodiment, near the exit 22 from a moving-carpet floor 27 and parallel to the inner wall 4, there are placed disconnecting means 33, with the aid of which the teat cups 9 at the end of the moving-carpet floor 27 can be automatically disconnected from the teats of an animal 8. As is also the case in the foregoing exemplary embodiments, the disconnecting means 33 can also be designed as computer-controlled stepping motors disposed under the vertical hinge pins 13, enabling the teat cups 9 to be disconnected in any position on a moving-carpet floor 27. Moreover, it is possible to apply the disconnecting means 33, as described and as drawn in Figure 4, in the exemplary embodiments in accordance with Figures 1 to 3.

Furthermore, it is feasible to make use of only a single moving-carpet floor 27. The number of milking parlours 2 on a moving-carpet floor 27 is dependent on the length of the moving-carpet floor 27 and the number of milking clusters placed on the conveyor belt 28 and it is thus determined by the options chosen.

The operation of the construction in accordance with Figure 4 is as follows.

After the identity of the animal has been established by means of the animal identification system and the computer has decided that the animal may be milked, the computer-controlled entrance door 21 to the cleaning box 19 is opened, whereupon the animal can take its position in the cleaning box 19, where the teats of the animal will be cleaned. After the teats have been cleaned and when there is a free milking parlour 2 in front of the entrance 17, a computer-controlled entrance door 18 to the respective moving-carpet floor 27 is opened, whereupon the animal can take its position in the relevant milking parlour 2. Simultaneously with the entry into the milking parlour 2 or shortly afterwards, the moving-carpet floor 27 is put in motion and, with the moving-carpet floor 27, the animal 8 is moved in the direction of the exit 22. After the milking robot 15 has seized the load-bearing arm, the positions of the teats are determined by means of a detector mounted on the robot 15. After this, the teat cups 9 are put to underneath the animal's teats by means of the milking robot 15, whereupon the teat cups 9 are sequentially or simultaneously connected to the teats. The milking robot 15 is moved along the rail track 16 simultaneously with the movement of the animal 8, all this lasting just as long as it takes to connect all teat cups 9 to the teats of the animal 8 to be milked. After the teat cups have been connected, the milking robot 15 is disconnected from the load-bearing arm 10 and returned to the position of departure via the rail track 16, whereupon another milking cluster can be connected to a subsequent animal by means of the milking robot 15. During milking and the stay in the milking parlour 2, the animal 8, with the moving-carpet floor 27, is moved in the direction of the exit 22. When an udder quarter has been milked out, a teat cup 9 can be disconnected individually, or when the udder is empty, the teat cups can be disconnected simultaneously, just as the case may be in the foregoing exemplary embodiments. A milked animal 8 can leave the moving-carpet floor 27 when the milking parlour 2 has arrived at the exit 22. After the animal 8 has left the milking parlour 2, the teat cups 9 are cleaned with cleaning means 34, whereupon they are moved along the pulley 31 to the adjacent moving-carpet floor 27, where, by means of the milking robot 15, they can be connected to an animal 8 to be milked.

## Claims

1. A construction including an implement for milking animals, using one or more milking robots (15), whereby the implement comprises a rotary platform (1), on which there are provided milking parlours (2), with the rotational speed of the platform (1) being essentially determined by the time required by a robot (15) for connecting the teat cups (9) to the teats of an animal (8), characterized in that the milking robot (15) is placed next to the movable floor and is capable of being moved reciprocatingly along a part of the movable floor.

2. A construction according to claim 1, characterized in that the implement is arranged such that, in order to be milked, the animals (8) to be milked can set foot on the rotating platform (1) one after the other at intervals of about one minute.

3. A construction according to claim 1 or 2, characterized in that the implement comprises a plurality of milking parlours (2) which are detachably interconnected such that the implement is adaptable to the size of the farm.

4. A construction according to claim 3, characterized in that the platform (1) is bounded on both sides or on one side by a stationary or fixed wall (3, 4).

5. A construction according to claim 4, characterized in that the walls (3, 4) are designed as a fencing.

6. A construction according to any one of claims 3 to 5, characterized in that a milking parlour (2) is on the front side and on the rear side bounded by a wall (5, 6) which is moved along with the platform (1).

7. A construction according to claim 6, characterized in that the wall (5) at the front side of a milking parlour (2) comprises a feed trough (7).

8. A construction according to any one of the preceding claims, characterized in that the entrance (17) to the movable floor is provided with a computer-controlled entrance door (18).

9. A construction according to any one of the preceding claims, characterized in that the construction is provided with an animal identification system comprising transponders (24) disposed on the animals (8).

10. A construction according to any one of the preceding claims, characterized in that the construction comprises a shed wherein the implement for milking animals is installed, with this shed being designed as a loose house.

11. A construction according to any one of the preceding claims, characterized in that the implement comprises a computer-controlled concentrates-proportioning system (32) suitable for individually dispensing a defined amount of feeds to each animal (8).

## Patentansprüche

1. Anlage mit einer Vorrichtung zum Melken von Tieren unter Verwendung eines oder mehrerer Melkroboter (15), wobei die Vorrichtung eine drehbare Plattform (1) aufweist, auf der Melkstände (2) angeordnet sind, und wobei die Rotationsgeschwindigkeit der Plattform (1) im wesentlichen von der Zeit bestimmt wird, die ein Roboter (15) zum Anschließen der Zitzenbecher (9) an die Zitzen eines Tieres (8) benötigt,
dadurch gekennzeichnet, daß der Melkroboter (15) nahe dem beweglichen Boden angeordnet und an einem Teil des beweglichen Bodens entlang hin- und herbewegbar ist.

2. Anlage nach Anspruch 1,
dadurch gekennzeichnet, daß die Vorrichtung derart angeordnet ist, daß die zu melkenden Tiere (8) in Abständen von etwa einer Minute nacheinander die drehbare Plattform (1) betreten können, um gemolken zu werden.

3. Anlage nach Anspruch 1 oder 2,
dadurch gekennzeichnet, daß die Vorrichtung mehrere Melkstände (2) aufweist, die lösbar derart miteinander verbunden sind, daß die Vorrichtung an die Größe des Betriebes anpaßbar ist.

4. Anlage nach Anspruch 3,
dadurch gekennzeichnet, daß die Plattform (1) auf beiden Seiten oder auf einer Seite durch eine stationäre oder feststehende Wand (3, 4) begrenzt ist.

5. Anlage nach Anspruch 4,
dadurch gekennzeichnet, daß die Wände (3, 4) als Umzäunung ausgeführt sind.

6. Anlage nach einem der Ansprüche 3 bis 5,
dadurch gekennzeichnet, daß ein Melkstand (2) an der Vorder- und an der Rückseite durch eine Wand (5, 6) begrenzt ist, die gemeinsam mit der Plattform (1) bewegt wird.

7. Anlage nach Anspruch 6,
dadurch gekennzeichnet, daß die Wand (5) an der Vorderseite eines Melkstandes (2) einen Futtertrog (7) aufweist.

8. Anlage nach einem der vorhergehenden Ansprüche,
dadurch gekennzeichnet, daß der Eingang (17) zu dem beweglichen Boden mit einer rechnergesteuerten Eingangstür (18) versehen ist.

9. Anlage nach einem der vorhergehenden Ansprüche,
dadurch gekennzeichnet, daß die Anlage mit einem Tieridentifikationssystem ausgestattet ist, das auf den Tieren (8) angeordnete Transponder (24) umfaßt.

10. Anlage nach einem der vorhergehenden Ansprüche,
dadurch gekennzeichnet, daß die Anlage einen Stall aufweist, in dem die Vorrichtung zum Melken von Tieren installiert ist, wobei dieser Stall als Laufstall ausgeführt ist.

11. Anlage nach einem der vorhergehenden Ansprüche,
dadurch gekennzeichnet, daß die Vorrichtung ein rechnergesteuertes Kraftfutterzuteilungssystem (32) aufweist, das in der Lage ist, jedem Tier (8) eine bestimmte Menge an Futter einzeln zuzuteilen.

## Revendications

1. Installation comportant une réalisation de traite d'animaux, utilisant un ou plusieurs robots de traite (15), par laquelle l'installation comporte une plate-forme rotative (1), sur laquelle sont agencés des box de traite (2), la vitesse de rotation de la plate-forme rotative (1) étant pratiquement déterminée par le temps nécessaire à un robot (15) pour connecter les gobelets trayeurs (9) aux trayons d'un animal (8), caractérisée en ce que le robot de traite (15) est placé à côté du plancher mobile et peut être déplacé en va-et-vient le long d'une partie du plancher mobile.

2. Installation selon la revendication 1, caractérisée en ce que la réalisation est agencée de telle manière que, pour être traits, les animaux (8) à traire peuvent prendre pied sur la plate-forme rotative (1) l'un après l'autre à des intervalles d'environ une minute.

3. Installation selon la revendication 1 ou 2, caractérisée en ce que la réalisation comporte une pluralité de box de traite (2) qui sont connectés mutuellement de manière amovible de telle manière que l'installation est adaptable à la taille de la ferme.

4. Installation selon la revendication 3, caractérisée en ce que la plate-forme (1) est délimitée de chaque côté ou sur un côté par une paroi stationnaire ou fixe (3, 4).

5. Installation selon la revendication 4, caractérisée en ce que les parois (3, 4) sont conçues sous la forme d'une barrière.

6. Installation selon l'une quelconque des revendications 3 à 5, caractérisée en ce qu'un box de traite (2) est délimité sur le côté avant et sur le côté arrière par une paroi (5, 6) qui est déplacée avec la plate-forme (1).

7. Installation selon la revendication 6, caractérisée en ce que la paroi (5) située au niveau du côté avant du box de traite (2) comporte une auge (7).

8. Installation selon l'une quelconque des revendications précédentes, caractérisée en ce que l'entrée (17) vers le plancher mobile est munie d'une porte d'entrée commandée par ordinateur (18).

9. Installation selon l'une quelconque des revendications précédentes, caractérisée en ce que l'installation est munie d'un système d'identification d'animal comportant des transpondeurs (24) disposés sur les animaux (8).

10. Installation selon l'une quelconque des revendications précédentes, caractérisée en ce que l'installation comporte un hangar dans lequel l'installation pour la traite d'animaux est installée, ce hangar étant conçu sous la forme d'un bâtiment ouvert.

11. Installation selon l'une quelconque des revendications précédentes, caractérisée en ce que la réalisation comporte un système de dosage de concentrés commandé par ordinateur (32) approprié pour distribuer individuellement une quantité définie d'aliments à chaque animal (8).
